# EUROPÄISCHE PATENTANMELDUNG

(11) **EP 2 687 740 A1**
(43) Veröffentlichungstag der Anmeldung: **22.01.2014**
(21) Anmeldenummer: 12176795.8
(22) Anmeldetag: 18.07.2012
(51) Int. Cl.: F16C 33/46

(54) **Verriegelung zwischen den beiden Enden eines geschlitzten Wälzlagerkäfigs**

(71) Anmelder: Aktiebolaget SKF, 415 50 Göteborg (SE)
(72) Erfinder: Steblau, Dieter, 97074 Würzburg (DE)
(74) Vertreter: Schonecke, Mitja

(57) **Zusammenfassung**

Die Erfindung betrifft einen gestuft geschlitzten Lagerkäfig (10) mit mit zwei in einer Umfangsrichtung verlaufenden und axial beabstandeten Seitenringen (11), wobei der Lagerkäfig (10) in Umfangsrichtung an wenigstens einer Trennstelle zwischen einem ersten und einem zweiten Lagerkäfigabschnitt (13a; 13b) geschlitzt ausgebildet ist, wobei an Begrenzungsflächen (14) der Trennstelle in den Seitenringen (11) des ersten und zweiten Lagerkäfigabschnitts (13a; 13b) Paare einander zugeordneter erster Vorsprünge (15) und dazu korrespondierender erster Ausnehmungen (16) eingeformt sind, um die Begrenzungsflächen (14) zueinander in wenigstens zwei Richtungen zu fixieren, und wobei zwischen den in den Seitenringen (11) eingeformten Paaren einander zugeordneter erster Vorsprünge (15) und erster Ausnehmungen (16) ferner ein Paar aus einem zweiten Vorsprung (17) und einer dazu korrespondierenden zweiten Ausnehmung (18) vorgesehen ist, welches ausgebildet ist, um die Lagerkäfigabschnitte (13a; 13b) zusätzlich in einer dritten Richtung zu fixieren.

## Beschreibung

Die vorliegende Erfindung betrifft einen geschlitzten Lagerkäfig, insbesondere für Wälzlager, und ein Verfahren zur Herstellung eines solchen Lagerkäfigs.

Lagerkäfige für Wälzlager bestehen im Allgemeinen aus zwei in einem axialen Abstand angeordneten Seitenringen und mehreren, diese Seitenringe verbindenden und in einer Umfangsrichtung des Lagerkäfigs hintereinander angeordneten Stegen, welche paarweise Taschen zur Aufnahme von Wälzkörpern bilden. Ein Lagerkäfig hält die Wälzkörper mittels der dafür vorgesehenen Taschen auf Abstand zueinander und verhindert eine unmittelbare Berührung benachbarter Wälzkörper, wodurch Reibung und damit Wärmeentwicklung im Lager typischerweise verringert werden kann. Er sorgt außerdem für eine gleichmäßige Verteilung der Wälzkörper über einen gesamten Umfang des Käfigs bzw. Wälzlagers und ermöglicht so eine gleichmäßige Lastverteilung sowie einen ruhigen und gleichmäßigen Lauf.

Wälzlagerkäfige werden im Betrieb durch Reibungs-, Zerr- und Trägheitskräfte mechanisch stark beansprucht. Dazu können unter Umständen auch chemische Einwirkungen durch bestimmte Zusätze und Substanzen kommen. Formgebung und Werkstoffwahl sind deshalb für eine Funktionstüchtigkeit des Käfigs ebenso wie für eine Betriebszuverlässigkeit des Lagers, insgesamt von entscheidender Bedeutung. Typischerweise umfassen Wälzlagerkäfige gepresste Käfige und Massivkäfige. Gepresste Käfige für Wälzlager werden meist aus Stahlblech, in einigen Fällen auch aus Messingblech gefertigt. Massivkäfige für Wälzlager können beispielsweise aus Messing, Stahl, Aluminium, Polymeren oder Phenolharz hergestellt sein.

Kunststoffmassivkäfige, die oftmals mittels Spritzgussverfahren gefertigt werden, zeichnen sich durch eine günstige Kombination von Festigkeit und Elastizität aus. Gute Gleiteigenschaften von Kunststoff auf geschmierten Stahlflächen und eine geringe Rauheit der Käfigoberflächen an Berührungsstellen mit Wälzkörpern haben eine niedrige Käfigreibung, eine entsprechend geringe Wärmeentwicklung im Lager und einen kaum messbaren Verschleiß zur Folge. Wegen der geringen Werkstoff dichte bleiben auch Kräfte aus der Massenträgheit des Käfigs klein. Dank sehr guter Notlaufeigenschaften von Kunststoffkäfigen bleibt ein Lager selbst bei völligem Versagen der Schmierung noch für einige Zeit funktionsfähig, ohne dass es zum Blockieren des Lagers oder zu weiteren Folgeschäden kommt.

Bei Kunststoffen für herkömmlich gespritzte Wälzlagerkäfige kann es sich beispielsweise um Polyamid 66, Polyamid 46, Polyetheretherketon (PEEK), Phenolharz oder auch einen anderen Polymerwerkstoff handeln.

Aus dem Stand der Technik sind auch Wälzlagerkäfige bekannt, welche an einer Trennstelle bzw. -fuge in Umfangsrichtung einen durchgehenden Schlitz aufweisen. Die die Trennstelle begrenzenden Käfig- bzw. Seitenringenden werden dabei durch Stege (Umfangsstege) gebildet, welche zueinander korrespondierende Vorsprünge und Ausnehmungen aufweisen, um die Käfigenden beispielsweise mittels einer Schnappverbindung miteinander zu fixieren bzw. zu koppeln. Derartige geschlitzte Wälzkörperkäfige, bei denen ein an den Käfigenden angebrachtes so genanntes Schloss die Käfigenden festlegt bzw. fixiert, können vielseitig eingesetzt werden, wie z.B. bei der Lagerung von Ausgleichswellen oder zur Lagerung von Zahnrädern auf Wellen in schaltgetriebenen Kraftfahrzeugen.

Bei bekannten geschlitzten Wälzlagerkäfigen sind die Vorsprünge und Ausnehmungen an den Käfigenden zumeist so gestaltet, dass die Käfigenden in wenigstens einer Richtung aus der Menge axialer, radialer und tangentialer Richtungen nicht verliersicher gehalten werden. Selbst wenn dies der Fall ist, weisen bekannte Verbindungs- bzw. Festlegungskonzepte für Käfigenden Nachteile hinsichtlich ihrer Belastbarkeit und/oder Festigkeit in wenigstens einer der vorgenannten Richtungen auf.

Es ist daher eine Aufgabe der vorliegenden Erfindung, den Stand der Technik hinsichtlich geschlitzter Lagerkäfige weiterzubilden, und ein verbessertes Konzept für einen geschlitzten Lagerkäfig sowie für dessen Herstellung bereitzustellen.

Es ist eine Erkenntnis der vorliegenden Erfindung, eine Festlegung (Fixierung) in wenigstens zwei Richtungen (z. B. radial und tangential oder axial und tangential) von zwei durch eine Trennstelle getrennten Enden eines ersten und eines zweiten Lagerkäfigabschnitts vermittels in Lagerkäfigabschnittenden eingeformter Paare einander zugeordneter erster Vorsprünge und erster Ausnehmungen zu erhalten. Dabei stammen die wenigstens zwei Richtungen aus einer Menge aus einer axialen, einer radialen und einer tangentialen Richtung. Die ersten (männlichen) Vorsprünge und die ersten dazu korrespondierenden (weiblichen) Ausnehmungen sind in bzw. an die Käfig- bzw. Seitenringenden des ersten und des zweiten Lagerkäfigabschnitts an- bzw. eingeformt. Sie sind ausgebildet, um bei einem Ineinanderschieben der ersten Vorsprünge und der dazu korrespondierenden ersten Ausnehmungen eine formschlüssige Verbindung des ersten und des zweiten Lagerkäfigabschnitts in den wenigstens zwei (zueinander senkrechten) Richtungen zu gewährleisten. Für eine zusätzliche Fixierung der beiden Lagerkäfigabschnitte an der Trennstelle in einer dritten, zu den anderen beiden Richtungen senkrechten Richtung aus der Menge, wird axial zwischen den in den Umfangsstegen eingeformten Paaren einander zugeordneter erster Vorsprünge und erster Ausnehmungen ferner wenigstens ein Paar aus einem zweiten Vorsprung und einer zweiten Ausnehmung vorgesehen, welches ausgebildet ist, um die beiden Lagerkäfigabschnitte zusätzlich in der dritten Richtung zu fixieren.

Dazu sehen Ausführungsbeispiele der vorliegenden Erfindung einen Lagerkäfig für ein Wälzlager mit zwei in einer Umfangsrichtung verlaufenden und axial beabstandeten Seitenringen vor, wobei der Lagerkäfig in Umfangsrichtung an wenigstens einer Trennstelle zwischen einem ersten und einem zweiten Lagerkäfigabschnitt geschlitzt ausgebildet ist. An Begrenzungsflächen der Trennstelle in den Seitenringen des ersten und zweiten Lagerkäfigabschnitts sind Paare einander zugeordneter erster Vorsprünge und dazu korrespondierender erster Ausnehmungen eingeformt, um die Begrenzungsflächen zueinander in wenigstens zwei Richtungen (aus der Menge aus axialer, radialer und tangentialer Richtung) zu fixieren (z. B. radial und tangential oder axial und tangential). Zwischen den in den Seitenringen eingeformten Paaren einander zugeordneter erster Vorsprünge und erster Ausnehmungen ist ferner ein Paar aus einem zweiten Vorsprung und einer dazu korrespondierenden zweiten Ausnehmung vorgesehen, welches ausgebildet ist, um die Begrenzungsflächen bzw. Lagerkäfigabschnitte zueinander zusätzlich in einer dritten (vorzugsweise von den wenigstens zwei Richtungen verschiedenen) Richtung zu fixieren (z. B. axial oder radial).

Die drei Richtungen sind dabei zueinander senkrecht, wie z. B. eine radiale, eine tangentiale und eine axiale Richtung.

Gemäß Ausführungsbeispielen kann ein erster Vorsprung des ersten Lagerkäfigabschnitts gegenüber einer dazu korrespondierenden ersten Ausnehmung des zweiten Lagerkäfigabschnitts ein Übermaß aufweisen, sodass beim Einschieben des ersten Vorsprungs in die erste Ausnehmung eine lösbare Schnappverbindung bzw. eine formschlüssige Verbindung der beiden Lagerkäfigabschnitte gebildet werden kann, um die Lagerkäfigabschnitte an der Trennstelle in den wenigstens zwei Richtungen zueinander zu fixieren, beispielsweise, aber nicht einschränkend, sowohl in radialer als auch in tangentialer Richtung.

Das in axialer Richtung zwischen den an den Umfangsstegen eingeformten Paaren einander zugeordneter erster Vorsprünge und erster Ausnehmungen angeordnete Paar aus dem zweiten Vorsprung und der dazu korrespondierenden zweiten Ausnehmung kann demnach ausgebildet sein, um die Lagerkäfigabschnitte zusätzlich z.B. in axialer Richtung, d. h. in Richtung der Rotationsachse des rotationssymmetrischen Lagerkäfigs, zu fixieren.

Mit geschlitzten Lagerkäfigen gemäß Ausführungsbeispielen der vorliegenden Erfindung können stabilere und/oder belastbare Verbindungen der beiden Lagerkäfigabschnitte erreicht werden als mit herkömmlichen geschlitzten Lagerkäfigen. Durch die bei Ausführungsbeispielen geschickt gewählte Anordnung bzw. Formgebung der Paare von ersten Vorsprüngen und ersten Ausnehmungen sowie der darauf abgestimmten Anordnung bzw. Formgebung des wenigstens einen Paars aus zweitem Vorsprung und zweiter Ausnehmung wird eine formschlüssige Verbindung der Lagerkäfigabschnitte in radialer, tangentialer und axialer Richtung erreicht, welche gleichzeitig in sämtlichen dieser drei Richtungen belastbar ist. Selbst bei aus Kunststoff gebildeten Lagerkäfigen kommt es mittels Ausführungsbeispielen der vorliegenden Erfindung weniger schnell zu einem Ausbrechen von Vorsprüngen und/oder Ausnehmungen als dies bei herkömmlichen geschlitzten Lagerkäfiganordnungen der Fall ist.

Gemäß Ausführungsbeispielen sind die an den Begrenzungsflächen der Trennstelle eingeformten ersten Vorsprünge und Ausnehmungen in Umfangsrichtung gegenüberliegend in die Umfangsstege eingeformt, sodass sich ein erster Vorsprung und eine erste Ausnehmung in Umfangsrichtung ineinanderschieben lassen. In anderen Worten ausgedrückt bedeutet dies, dass die Seitenringe bzw. Umfangsstege der beiden Lagerkäfigabschnitte an der Trennstelle in tangentialer Richtung einander gegenüberliegende Begrenzungsflächen aufweisen, in welche die ersten Vorsprünge bzw. die dazu korrespondierenden ersten Ausnehmungen eingeformt sind. Dies ermöglicht ein mechanisch einfaches und intuitives Ineinanderstecken der ersten Vorsprünge in die ersten Ausnehmungen, um die beiden getrennten Lagerkäfigabschnitte an ihren durch die Umfangsstege gebildeten Seitenringenden sowohl in radialer als auch in tangentialer Richtung zueinander festzulegen.

Gemäß manchen Ausführungsbeispielen kann ein an einer Begrenzungsfläche der Trennstelle eingeformter erster Vorsprung eine für eine lösbare Schnappverbindung mit einer dem ersten Vorsprung zugeordneten ersten Ausnehmung geeignete Formgebung aufweisen. Beispielsweise kann der erste Vorsprung dazu einen im Wesentlichen halbkreis- bis kreisförmigen Querschnitt senkrecht zur Rotationsachse des ringförmigen Lagerkäfigs aufweisen. Dementsprechend kann eine einem ersten Vorsprung zugeordnete erste Aufnahme bzw. Ausnehmung für die lösbare Schnappverbindung einen dem im wesentlichen halbkreis- bis kreisförmigen Querschnitt angepassten sphärischen Querschnitt, senkrecht zur Rotationsachse des Lagerkäfigs gesehen, aufweisen. Der erste Vorsprung kann daher beispielsweise einen kugel- bzw. halbkugelförmigen Endabschnitt aufweisen, welcher in eine dazu korrespondierende sphärisch ausgebildete Aufnahme eingreifen kann.

Gemäß weiteren Ausführungsbeispielen kann sich ein an einer Begrenzungsfläche der Trennstelle angeformter erster Vorsprung vorwiegend in axialer Richtung erstrecken. Seine axiale Erstreckung ist somit größer als seine Abmessungen in tangentialer und/oder radialer Richtung. Ein an einer Begrenzungsfläche der Trennstelle angeformter erster Vorsprung kann sich axial im Wesentlichen entsprechend einer axialen Erstreckung eines diesem zugeordneten bzw. angeformten Umfangsstegs erstrecken, und dabei an seinem der Trennstelle zugewandten Ende kugel- bzw. halbkugelförmig ausgebildet sein. Es versteht sich von selbst, dass bei derartigen Ausführungsbeispielen eine zu dem ersten Vorsprung korrespondierende erste Aufnahme in ihrer Formgebung korrespondierend bzw. invers zu der Formgebung des ersten Vorsprungs ausgebildet ist. Insbesondere durch Ausführungsbeispiele, bei denen ein erster Vorsprung und eine diesem zugeordnete erste Aufnahme eine in axialer Richtung beachtliche Erstreckung aufweisen, können relativ hohe radiale sowie tangentiale Kräfte aufgenommen werden, ohne dass sich die Verbindung zwischen den Lagerkäfigabschnitten löst und/oder erste Aufnahmen und/oder erste Vorsprünge ausbrechen.

Der an einem Käfigende in axialer Richtung zwischen ersten Vorsprüngen beispielsweise in Form einer Stufe angeordnete zweite Vorsprung kann gemäß Ausführungsbeispielen in axialer Richtung gegenüber der zweiten Ausnehmung, die an dem anderen Käfigende axial zwischen den ersten Ausnehmungen angeordnet ist, ein Übermaß aufweisen, sodass beim Einschieben des zweiten Vorsprungs in die zweite Ausnehmung eine Presspassung bzw. eine formschlüssige Verbindung der beiden Enden der Lagerkäfigabschnitte gebildet werden kann, um die Lagerkäfigabschnitte an ihrer Trennstelle auch in axialer Richtung zueinander festzulegen. Allerdings kann auch ein kleines axiales Spiel zwischen dem zweitem Vorsprung und der zweiten Ausnehmung anwendungsbedingt von Vorteil sein, beispielsweise für eine leichte Handmontage. Ein axial zwischen den ersten Vorsprüngen angeordneter zweiter Vorsprung greift so in eine zu dem zweiten Vorsprung korrespondierende und axial zwischen den ersten Ausnehmungen angeordnete zweite Ausnehmung, derart, dass dadurch eine axiale Festlegung bzw. Fixierung der beiden Lagerkäfigabschnitte zueinander gewährleistet wird.

Durch die Kombination der ersten Vorsprünge und der ersten Ausnehmungen sowie des dazwischenliegenden Paars aus zweitem Vorsprung und zweiter Ausnehmung kann eine Festlegung der beiden Lagerkäfigabschnitte sowohl in radialer, tangentialer (Umfangsrichtung) als auch in axialer Richtung erreicht werden.

Durch eine bestimmte Formgebung des zweiten Vorsprungs und der zweiten Ausnehmung kann die Fixierung besonders stabil bzw. belastbar ausgestaltet werden. Gemäß manchen Ausführungsbeispielen kann sich dazu das Paar aus dem zweiten Vorsprung und der zweiten Ausnehmung in axialer Richtung im Wesentlichen entsprechend einer axialen Erstreckung eines die Umfangsstege verbindenden Verbindungsstegs erstrecken. D.h., sowohl der zweite Vorsprung als auch die korrespondierende zweite Ausnehmung entsprechen ungefähr einer axialen Ausdehnung einer zwischen den Umfangsstegen bzw. Seitenringen angeordneten Wälzkörpertasche. Diese axiale Ausdehnung bzw. Erstreckung kann gemäß manchen Ausführungsbeispielen mindestens die Hälfte der axialen Erstreckung des Lagerkäfigs betragen. Gerade bei einer derartig erheblichen axialen Erstreckung des Paars aus zweitem Vorsprung und zweiter Ausnehmung werden, insbesondere in axialer Richtung, besonders belastbare Verbindungen von Lagerkäfigabschnitten geschlitzter Lagerkäfige erreicht.

Obwohl Lagerkäfige, wie es eingangs bereits beschrieben wurde, prinzipiell aus verschiedenen Materialien hergestellt sein können, umfassen Ausführungsbeispiele insbesondere aus Kunststoff geformte und geschlitzt ausgebildete Wälzlagerkäfige. Ausführungsbeispiele der vorliegenden Erfindung umfassen somit auch Wälzlager mit geschlitzten Wälzlagerkäfigen gemäß Ausführungsbeispielen. Die Kunststoffkäfige können beispielsweise mittels eines Kunststoff-Spritzgussverfahrens hergestellt werden.

Weitere Ausführungsbeispiele der vorliegenden Erfindung sehen auch ein Verfahren zum Herstellen eines erfindungsgemäßen Lagerkäfigs vor. Ein derartiges Verfahren umfasst dazu einen Schritt des Ausbildens wenigstens einer Trennstelle in Umfangsrichtung zwischen einem ersten und einem zweiten Lagerkäfigabschnitt. In einem weiteren Schritt werden einander zugeordnete Paare erster Vorsprünge und erster Ausnehmungen an bzw. in Begrenzungsflächen der Trennstelle an bzw. in Seitenringen des ersten und zweiten Lagerkäfigabschnitts an- bzw. eingeformt, um die Begrenzungsflächen dadurch zueinander zu fixieren, dass ein erster Vorsprung des ersten Lagerkäfigabschnitts gegenüber einer dazu korrespondierenden ersten Ausnehmung des zweiten Lagerkäfigabschnitts ein Übermaß aufweist, sodass beim Einschieben des ersten Vorsprungs in die erste Ausnehmung eine Schnappverbindung zwischen den Lagerkäfigabschnitten gebildet werden kann, um die Lagerkäfigabschnitte an der Trennstelle sowohl in radialer als auch in tangentialer Richtung zueinander zu fixieren. Weiterhin wird ein Paar aus einem zweiten Vorsprung und einer dazu korrespondierenden zweiten Ausnehmung axial zwischen den in den Seitenringen eingeformten Paaren erster einander zugeordneter Vorsprünge und Ausnehmungen eingeformt, um die Lagerkäfigabschnitte zusätzlich in axialer Richtung zu fixieren.

Weitere Ausführungsformen und vorteilhafte Weiterbildungen sind Gegenstand der abhängigen Ansprüche sowie der nachfolgenden detaillierten Beschreibung.

Ausführungsbeispiele werden nachfolgend bezugnehmend auf die beiliegenden Figuren näher erläutert. Es zeigen:
- Fig. 1: eine dreidimensionale Darstellung eines geschlitzten Lagerkäfigs in geöffnetem Zustand, gemäß einem Ausführungsbeispiel;
- Fig. 2: eine vergrößerte dreidimensionale Darstellung eines Schlosses in geschlossenem Zustand an einem Seitenring des geschlitzten Lagerkäfigs gemäß Fig. 1; und
- Fig. 3: eine vergrößerte zweidimensionale Darstellung des Schlosses in geschlossenem Zustand an einem Seitenring des geschlitzten Lagerkäfigs gemäß Fig. 1.

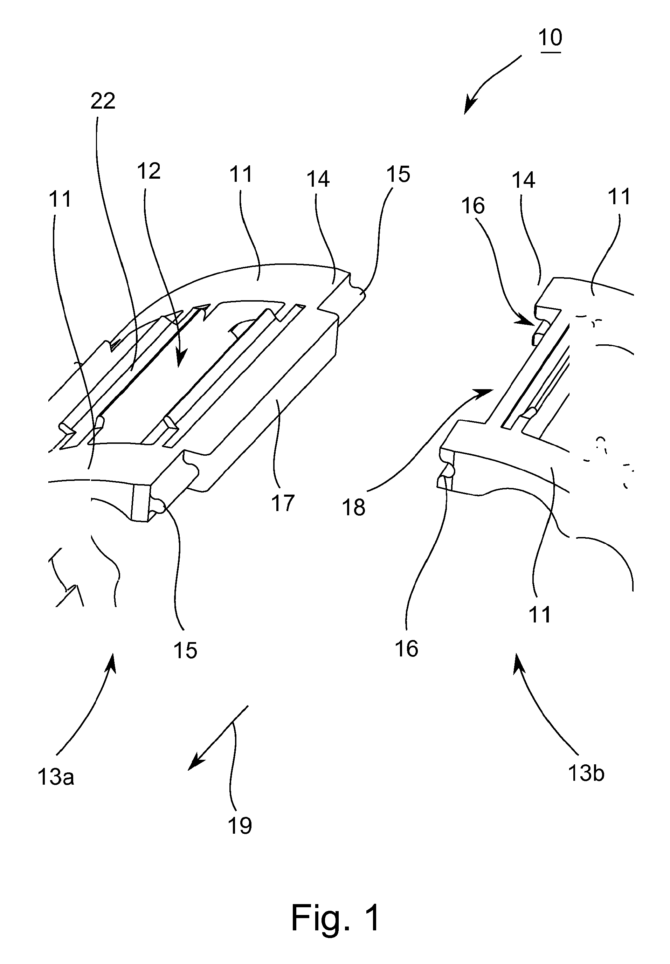

Die Fig. 1 zeigt einen Ausschnitt einer dreidimensionalen Darstellung eines gestuft geschlitzten Lagerkäfigs 10 gemäß einem Ausführungsbeispiel.

Der Lagerkäfig 10 weist zwei in Umfangsrichtung verlaufende und in axialer Richtung beabstandete Seitenringe 11 auf, zwischen denen Taschen 12 zur Aufnahme von (nicht gezeigten) Wälzkörpern angeordnet sein können bzw. angeordnet sind. Der geschlitzte Lagerkäfig 10 ist in Umfangsrichtung, die im Nachfolgenden auch als Tangentialrichtung bezeichnet wird, an wenigstens einer Trennstelle bzw. einem Schlitz zwischen einem ersten und einem zweiten Lagerkäfigabschnitt 13a und 13b geschlitzt ausgebildet. An links- und rechtsseitigen, d. h. den Lagerkäfigabschnitten 13a und 13b zugeordneten Begrenzungsflächen 14 der Trennstelle sind in den Seitenringen 11 des ersten und des zweiten Lagerkäfigabschnitts 13a, 13b Paare einander zugeordneter erster Vorsprünge 15 und erster Ausnehmungen 16 eingeformt, um die Begrenzungsflächen 14 bzw. die beiden Lagerkäfigabschnitte 13a, 13b relativ zueinander zu fixieren. Ein erster Vorsprung 15 des ersten Lagerkäfigabschnitts 13a weist gegenüber einer dazu korrespondierenden ersten Ausnehmung 16 des zweiten Lagerkäfigabschnitts 13b ein Übermaß auf, sodass beim Einschieben eines ersten Vorsprungs 15 in eine erste Ausnehmung 16 eine (lösbare) Schnappverbindung der beiden Lagerkäfigabschnitte 13a, 13b gebildet werden kann, um die Lagerkäfigabschnitte 13a, 13b an ihrer Trennstelle beispielhaft sowohl in radialer als auch in tangentialer Richtung zueinander zu fixieren. D. h., ein erster Vorsprung 15 des ersten Lagerkäfigabschnitts 13a und eine dazu korrespondierende ersten Ausnehmung 16 des zweiten Lagerkäfigabschnitts 13b können ausgebildet sein, um die Lagerkäfigabschnitte 13a, 13b an ihrer Trennstelle sowohl in radialer als auch in tangentialer Richtung zueinander zu fixieren. In diesem Fall können sich die Stege 15 und die entsprechenden Aufnahmen in axialer Richtung entlang der Begrenzungsflächen 14 erstrecken. Ebenso ist es z. B. denkbar, dass ein erster Vorsprung 15 des ersten Lagerkäfigabschnitts 13a und eine dazu korrespondierende ersten Ausnehmung 16 des zweiten Lagerkäfigabschnitts 13b ausgebildet sind, um die Lagerkäfigabschnitte 13a, 13b an ihrer Trennstelle sowohl in axialer als auch in tangentialer Richtung zueinander zu fixieren. In diesem Fall könnten die Stege 15 und die entsprechenden Aufnahmen um 90° gedreht, d.h. in radialer Richtung, an den Begrenzungsflächen 14 verlaufen.

In axialer Richtung zwischen den in den Seitenringen 11 eingeformten Paaren einander zugeordneter erster Vorsprünge 15 und erster Ausnehmungen 16 ist ferner ein Paar aus einem zweiten Vorsprung 17 und einer dazu korrespondierenden zweiten Ausnehmung 18 vorgesehen, welche jeweils ausgebildet sein können, um die Lagerkäfigabschnitte 13a, 13b zusätzlich auch in axialer Richtung, d. h. in Richtung einer mit dem Bezugszeichen 19 angedeuteten Rotationsachse des Lagerkäfigs 10, zu fixieren. D. h., der zweite Vorsprung 17 des ersten Lagerkäfigabschnitts 13a und die dazu korrespondierende zweite Ausnehmung 18 des zweiten Lagerkäfigabschnitts 13b können also ausgebildet sein, um die Lagerkäfigabschnitte 13a, 13b an ihrer Trennstelle in axialer Richtung zueinander zu fixieren. Ebenso ist es aber denkbar, z. B. bei axialer und tangentialer Fixierung der Lagerkäfigabschnitte 13a, 13b durch die ersten Vorsprünge 15 die dazu korrespondierenden ersten Ausnehmungen 16, dass der zweite Vorsprung 17 des ersten Lagerkäfigabschnitts 13a und die dazu korrespondierende zweite Ausnehmung 18 des zweiten Lagerkäfigabschnitts 13bjeweils ausgebildet sind, um die Lagerkäfigabschnitte 13a, 13b an ihrer Trennstelle in einer dazu senkrechten dritten Richtung, d. h. radial, zueinander zu fixieren. In diesem Falle müssten der zweite Vorsprung 17 und die zweite Ausnehmung 18 entsprechend geformt sein. Für eine radiale Fixierung dürften sie sich aber in radialer Richtung nicht über eine gesamte Höhe der Lagerkäfigabschnitte 13a, 13b erstrecken (entgegen der Darstellung in Fig. 1), sondern nur über eine Teil davon, wie dies beispielsweise bei den dargestellten Vorsprüngen 15 und Ausnehmungen 16 der Fall ist.

Die jeweils an den Lagerkäfigabschnittsenden an- bzw. eingeformten ersten Vorsprünge 15 und die dazu korrespondierenden ersten Ausnehmungen 16 bilden ein an den Lagerkäfigabschnittsenden angebrachtes Schloss, um die Käfigenden bzw. die Lagerkäfigabschnitte 13a, 13b festzulegen bzw. zu fixieren. Wie es aus der Fig. 1 zu erkennen ist, können die an den Begrenzungsflächen 14 der Trennstelle angeformten ersten Vorsprünge 15 und die eingeformten ersten Ausnehmungen 16 jeweils in Umfangsrichtung, d. h. in Tangentialrichtung, gegenüberliegend an bzw. in die durch die Seitenringe 11 gebildeten Umfangsstege an- bzw. eingeformt sein, sodass sich einer der ersten Vorsprünge 15 und eine der ersten Ausnehmungen 16 in Umfangsrichtung ineinanderschieben lassen. In anderen Worten ausgedrückt können sowohl die ersten Vorsprünge 15 als auch die ersten Ausnehmungen 16 an der Trennstelle jeweils in Umfangs- bzw. Tangentialrichtung weisen.

Es versteht sich von selbst, dass die in Fig. 1 dargestellte Anordnung lediglich eines von zahlreichen möglichen Ausführungsbeispielen darstellt. Beispielsweise brauchen die ersten Vorsprünge 15 und die ersten Ausnehmungen 16 auch nicht, wie in Fig. 1 dargestellt, unterschiedlichen Lagerkäfigabschnitten 13a, 13b zugeordnet zu sein. Beispielsweise könnte der eine Stufe im Schlitz bildende zweite Vorsprung 17 des Lagerkäfigabschnitts 13a auch axial zwischen einem ersten Vorsprung 15 und einer ersten Ausnehmung 16 an dem Lagerkäfigabschnitt 13a angeordnet sein. Dementsprechend könnte auch die zweite Ausnehmung 18 des Lagerkäfigabschnitts 13b axial zwischen einem ersten Vorsprung 15 und einer ersten Ausnehmung 16, welche beide dem zweiten Lagerkäfigabschnitt 13b zugeordnet sind, angeordnet sein. In anderen Worten ausgedrückt bedeutet dies, dass es auch Ausführungsbeispiele gibt, bei denen ein erster Vorsprung 15 und eine erste Ausnehmung 16 an bzw. in ein und denselben Lagerkäfigabschnitt an- bzw. eingeformt sein können.

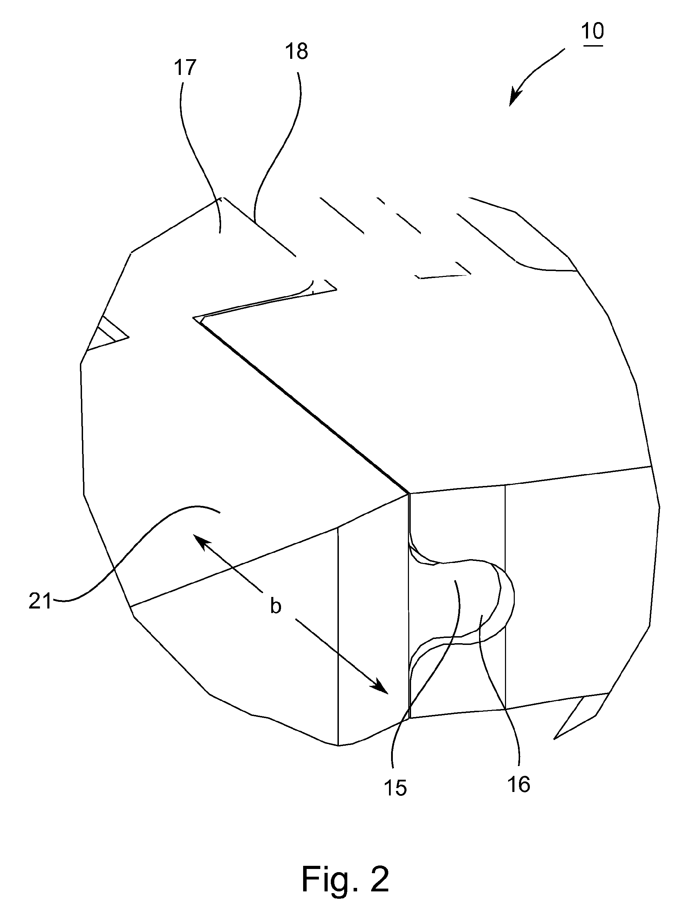

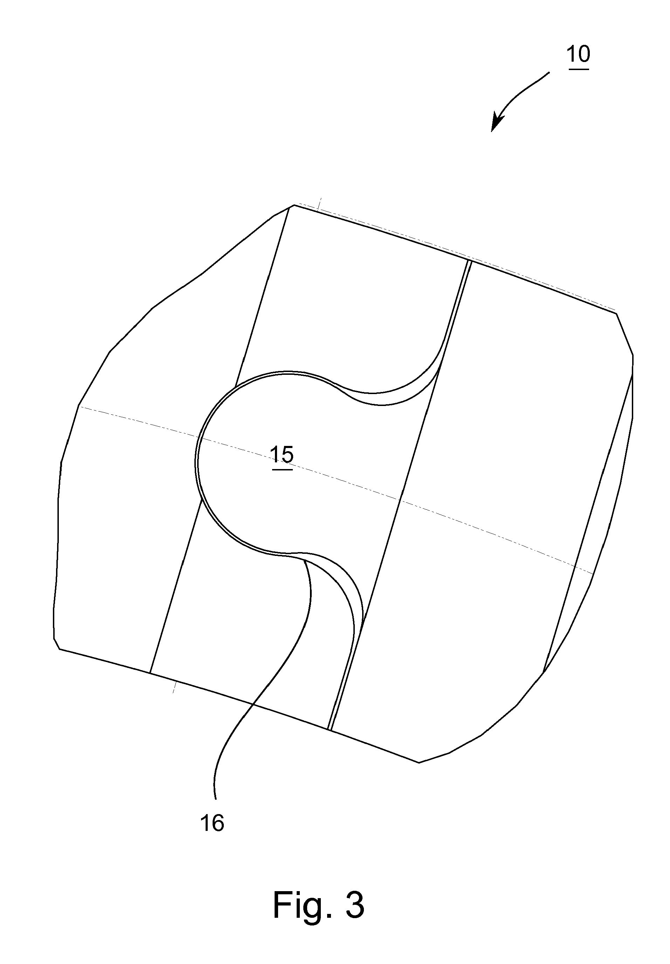

Wie es aus der Fig. 1 und insbesondere den vergrößernden Darstellungen der Fig. 2 und 3 zu entnehmen ist, kann bei Ausführungsbeispielen ein an einer Begrenzungsfläche 14 der Trennstelle eingeformter erster Vorsprung 15 z. B. einen im Wesentlichen halbkreis- bis kreisförmigen Querschnitt (senkrecht zur Rotationsachse 19 des Lagerkäfigs 10 gesehen) aufweisen. Dementsprechend kann eine an einem gegenüberliegenden Käfigabschnittende und dem ersten Vorsprung 15 zugeordnete erste Ausnehmung bzw. Aufnahme 16 z. B. einen dem im Wesentlichen halbkreis- bis kreisförmigen Querschnitt angepassten sphärischen Querschnitt (senkrecht zur Rotationsachse 19 des Lagerkäfigs 10) aufweisen. Ein erster Vorsprung 15 und/oder eine diesem zugeordnete und gegenüberliegende erste Ausnehmung 16 sind gemäß Ausführungsbeispielen in einem ausreichenden Maße elastisch verformbarer ausgebildet, sodass sich beim Einführen des (männlichen) ersten Vorsprungs 15 in die dazu korrespondierende (weibliche) erste Ausnehmung 16 zumindest eines der beiden Teile elastisch verformt, sodass es anschließend zu einem formschlüssigen Presssitz oder zu einer Schnappverbindung zwischen einem ersten Vorsprung 15 in einer ersten Ausnehmung 16 kommen kann (siehe Fig. 3). Durch den halbkreis- bis kreisförmigen Querschnitt eines Vorsprungs bzw. Eingriffs 15 (der dazu korrespondierenden Form einer Ausnehmung 16) wird insbesondere eine hohe Belastbarkeit der Lagerkäfigabschnittsverbindung in Tangentialrichtung gewährleistet.

Bei Ausführungsbeispielen kann die axiale Erstreckung (d.h. Erstreckung in axialer Richtung) bzw. Abmessung eines ersten Vorsprungs 15 vorteilhaft größer gewählt werden als seine Erstreckung in radialer und/oder tangentialer Richtung. Entsprechendes gilt dann natürlich auch für die dazu korrespondierende Ausnehmung 16. Insbesondere anhand der dreidimensionalen Ansichten der Fig. 1 und 2 lässt sich erkennen, dass sich ein an einer Begrenzungsfläche 14 der Trennstelle angeformter erster Vorsprung 15 in axialer Richtung 19 im Wesentlichen entsprechend einer axialen Erstreckung b eines Umfangsstegs 11 erstrecken kann. D.h., die axiale Erstreckung eines ersten Vorsprungs bzw. Eingriffs 15 kann näherungsweise einer axialen Wandstärke b eines Seitenrings 11 entsprechen. Diese kann bei Ausführungsbeispielen der vorliegenden Erfindung einen nicht unwesentlichen Teil einer gesamten axialen Erstreckung des gestuft geschlitzten Lagerkäfigs 10 ausmachen. Beispielsweise könnte die axiale Erstreckung eines ersten Vorsprungs 15 (und damit auch die axiale Erstreckung einer dazu korrespondierenden ersten Ausnehmung 16) in einem Bereich von 1% bis 30 % der gesamten axialen Erstreckung des Lagerkäfigs und insbesondere in einem Bereich von 5% bis 15 % dieser Erstreckung liegen. Diese nicht unwesentliche axiale Erstreckung eines Paars aus erstem Vorsprung 15 und erster Ausnehmung 16 kann vorteilhaft zu einer belastungsfähigen und stabilen Verbindung hinsichtlich Beanspruchungen in radialer sowie tangentialer Richtung führen, da in diese Richtungen wirkende Kräfte auf eine relativ große Vorsprungs- und Ausnehmungsoberflächen verteilt werden können.

Für eine zusätzliche Fixierung der beiden Lagerkäfigabschnitte 13a und 13b in axialer Richtung 19 ist der wenigstens eine zweite Vorsprung 17 und die wenigstens eine zweite Ausnehmung 18 korrespondierend zu dem Vorsprung 17 vorgesehen. Der zweite Vorsprung 17 kann in axialer Richtung gegenüber der zweiten Ausnehmung 18 ein leichtes Übermaß aufweisen, so dass beim Einschieben des zweiten Vorsprungs 17 in die zweite Ausnehmung 18 ein (axialer) Pressverband bzw. eine Press- oder Übermaßpassung der Lagerkäfigabschnitte 13a, 13b gebildet werden kann, um die Lagerkäfigabschnitte 13a, 13b an ihrer Trennstelle in axialer Richtung zueinander zu fixieren. D. h., der zweite Vorsprung 17 und die zweite Ausnehmung 18 sind so zueinander dimensioniert, dass es in einem in der Fig. 2 mit dem Bezugszeichen 21 bezeichneten Bereich zu einer Flächenpressung aufgrund des (leichten) axialen Übermaßes des ersten Vorsprungs 17 kommt. Allerdings sind auch Ausführungsbeispiele möglich, bei denen zwischen dem zweiten Vorsprung 17 und der zweiten Ausnehmung 18 ein (leichtes) axiales Spiel vorhanden ist. In radialer Richtung kann eine Abmessung des zweiten Vorsprungs 17 und der dazu korrespondierenden zweiten Ausnehmung 18 der radialen Höhe bzw. Wandstärke der Seitenringe 11 bzw. des Käfigs 10 entsprechen. Dadurch können aufwändige Fertigungsprozesse vermieden werden.

Gemäß manchen Ausführungsbeispielen kann sich das Paar aus zweitem Vorsprung 17 (Stufe) und dazu korrespondierender zweiter Ausnehmung 18 in axialer Richtung 19 im Wesentlichen entsprechend einer axialen Erstreckung eines die Umfangsstege 11 verbindenden Verbindungsstegs 22 erstrecken. D. h., die axiale Erstreckung des zweiten Vorsprungs 17 und/oder der zweiten korrespondierenden Ausnehmung 18 kann im Wesentlichen einer axialen Erstreckung von durch die Verbindungsstege 22 begrenzten Taschen 12 zur Aufnahme von Wälzkörpern entsprechen. Dies kann bei manchen Ausführungsbeispielen eine, gemessen an der gesamten axialen Erstreckung des Lagerkäfigs 10, recht signifikante Erstreckung sein, wodurch eine sehr stabile Kopplung der beiden Lagerkäfigabschnitte 13a, 13b erreicht werden kann, insbesondere in axialer Richtung. Beispielsweise könnte die axiale Erstreckung des zweiten Vorsprungs 18 (und damit auch die axiale Erstreckung der dazu korrespondierenden zweiten Ausnehmung 18) in einem Bereich von 40% bis 98 % der gesamten axialen Erstreckung des Lagerkäfigs und insbesondere in einem Bereich von 70% bis 90% dieser Erstreckung liegen. Der zweite Vorsprung 17 kann somit in verschnapptem Zustand der ersten Vorsprünge 15 und Ausnehmungen 16 bzw. der Lagerkäfigabschnitte 13a, 13b quasi ebenfalls als Verbindungssteg zwischen den Seitenringen 11 wirken.

Es versteht sich von selbst, dass die in der vorliegenden Spezifikation beschriebenen Abmessungen der Vorsprünge 15, 17 sowie der Ausnehmungen 16, 18 auch durchaus anders gewählt werden können, um ein gestuft geschlitztes Lagerkäfigdesign an seine radialen, tangentialen und/oder axialen Belastungen anzupassen. So könnte anstatt des zweiten Vorsprungs 17 auch beispielsweise eine Mehrzahl nebeneinander angeordneter zweiter Vorsprünge 17 zwischen den axial außen liegenden ersten Vorsprüngen 15 angeordnet sein. Entsprechendes gilt selbstverständlich auch für die korrespondierende zweite Ausnehmung 18.

Ausführungsbeispiele des hierin beschriebenen geschlitzten Lagerkäfigs 10 können beispielsweise aus Kunststoff gefertigt sein. Dabei kann der gestuft geschlitzte Lagerkäfig 10 insbesondere mittels eines Kunststoff-Spritzgussverfahrens hergestellt werden. Bei lediglich einer Trennstelle in einem ringförmigen Lagerkäfig, kann es sich bei dem Lagerkäfig 10 auch um ein einstückig geformtes Spritzgussteil handeln.

Es versteht sich von selbst, dass erfindungsgemäß gestuft geschlitzte Lagerkäfige in Wälzlagern zum Einsatz kommen können, so dass Ausführungsbeispiele der vorliegenden Erfindung auch Wälzlager mit erfindungsgemäßen Lagerkäfigen umfassen.

Zusammenfassend betreffen Ausführungsbeispiele der vorliegenden Erfindung einen gestuft geschlitzten Kunststoffkäfig mit Schloss. Die gestufte Schlitzform kann eine Fixierung der offenen Seiten bzw. Abschnitte in axialer Richtung sicherstellen und eine gegenseitige Versetzung verhindern. Das Schloss, umfassend die ersten Ausnehmungen 16 z.B. auf einer Stirnseite und die ersten Vorsprünge 15 z.B. auf der anderen Schlitzseite, kann nach einem Montageprozess "radiales/axiales Auf schnappen eines Rollenkranzes auf eine Welle" einen Spalt verhindern und einen Formschluss zwischen offenen Schlitzseiten sicherstellen. Somit stellt die Kombination "gestufter Schlitz + Schloss" eine Fixierung der Lagerkäfigabschnitte in axialer, radialer und tangentialer Richtung dar.

### Bezugszeichenliste

- 10: geschlitzter Lagerkäfig
- 11: Seitenring, Umfangssteg
- 12: Tasche für Wälzkörper
- 13: Lagerkäfigabschnitt
- 14: Begrenzungsfläche
- 15: erster Vorsprung
- 16: erste Ausnehmung
- 17: zweiter Vorsprung
- 18: zweite Ausnehmung
- 19: Rotationsachse
- 21: Presspassung
- 22: Verbindungssteg

## Patentansprüche

1. Ein Lagerkäfig (10) für ein Wälzlager mit zwei in einer Umfangsrichtung verlaufenden und axial beabstandeten Seitenringen (11),
wobei der Lagerkäfig (10) in Umfangsrichtung an wenigstens einer Trennstelle zwischen einem ersten und einem zweiten Lagerkäfigabschnitt (13a; 13b) geschlitzt ausgebildet ist,
wobei an Begrenzungsflächen (14) der Trennstelle in den Seitenringen (11) des ersten und zweiten Lagerkäfigabschnitts (13a; 13b) Paare einander zugeordneter erster Vorsprünge (15) und dazu korrespondierender erster Ausnehmungen (16) eingeformt sind, um die Begrenzungsflächen (14) zueinander in wenigstens zwei Richtungen zu fixieren, und
wobei zwischen den in den Seitenringen (11) eingeformten Paaren einander zugeordneter erster Vorsprünge (15) und erster Ausnehmungen (16) ferner ein Paar aus einem zweiten Vorsprung (17) und einer dazu korrespondierenden zweiten Ausnehmung (18) vorgesehen ist, welches ausgebildet ist, um die die Begrenzungsflächen (14) zusätzlich in einer dritten Richtung zu fixieren.

2. Der Lagerkäfig (10) nach Anspruch 1, wobei ein erster Vorsprung (15) des ersten Lagerkäfigabschnitts (13a; 13b) gegenüber einer ersten Ausnehmung (16) des zweiten Lagerkäfigabschnitts (13b; 13a) ein Übermaß aufweist, so dass beim Einschieben des ersten Vorsprungs (15) in die erste Ausnehmung (16) eine Schnappverbindung der Lagerkäfigabschnitte (13a; 13b) gebildet werden kann, um die Lagerkäfigabschnitte (13a; 13b) an der Trennstelle sowohl in radialer oder axialer als auch in tangentialer Richtung zueinander zu fixieren, und wobei das Paar aus dem zweiten Vorsprung (17) und der dazu korrespondierenden zweiten Ausnehmung (18) ausgebildet ist, um die Lagerkäfigabschnitte (13a; 13b) zusätzlich in axialer oder radialer Richtung zu fixieren.

3. Der Lagerkäfig (10) nach einem der vorhergehenden Ansprüche, wobei die an den Begrenzungsflächen (14) der Trennstelle eingeformten ersten Vorsprünge (15) und die dazu korrespondierenden ersten Ausnehmungen (16) in Umfangsrichtung gegenüberliegend in die Seitenringe (11) eingeformt sind, so dass sich ein erster Vorsprung (15) und eine dazu korrespondierende erste Ausnehmung (16) in Umfangsrichtung ineinander schieben lassen.

4. Der Lagerkäfig (10) nach einem der vorhergehenden Ansprüche, wobei ein an einer Begrenzungsfläche (14) der Trennstelle eingeformter erster Vorsprung (15) einen im wesentlichen halbkreis- bis kreisförmigen Querschnitt senkrecht zur Rotationachse (19) des Lagerkäfigs (10) aufweist, und wobei eine zu dem ersten Vorsprung (15) korrespondierende erste Ausnehmung (16) einen dem im wesentlichen halbkreis- bis kreisförmigen Querschnitt angepassten sphärischen Querschnitt senkrecht zur Rotationachse (19) des Lagerkäfigs (10) auf weist.

5. Der Lagerkäfig (10) nach einem der vorhergehenden Ansprüche, wobei sich ein an einer Begrenzungsfläche (14) der Trennstelle eingeformter erster Vorsprung (15) in axialer Richtung (19) entsprechend einer axialen Erstreckung eines Seitenrings (11) erstreckt.

6. Der Lagerkäfig (10) nach einem der vorhergehenden Ansprüche, wobei der zweite Vorsprung (17) in axialer Richtung (19) gegenüber der dazu korrespondierenden zweiten Ausnehmung (18) ein Übermaß aufweist, so dass beim Einschieben des zweiten Vorsprungs in die zweite Ausnehmung eine Presspassung der Lagerkäfigabschnitte (13a; 13b) gebildet werden kann, um die Lagerkäfigabschnitte (13a; 13b) an der Trennstelle in axialer Richtung zueinander zu fixieren.

7. Der Lagerkäfig (10) nach einem der vorhergehenden Ansprüche, wobei sich das Paar aus dem zweitem Vorsprung (17) und der dazu korrespondierenden zweiten Ausnehmung (18) in axialer Richtung im Wesentlichen entsprechend einer axialen Erstreckung eines die Umfangsstege verbindenden Verbindungsstegs erstreckt.

8. Der Lagerkäfig (10) nach einem der vorhergehenden Ansprüche, der einstückig aus einem Kunststoff geformt ist.

9. Ein Wälzlager mit einem Lagerkäfig (10) nach einem der vorhergehenden Ansprüche.

10. Ein Verfahren zum Herstellen eines Lagerkäfigs (10) mit zwei in einer Umfangsrichtung verlaufenden und axial beabstandeten Seitenringen (11), mit folgenden Schritten:
Ausbilden wenigstens einer Trennstelle in Umfangsrichtung zwischen einem ersten und einem zweiten Lagerkäfigabschnitt (13a; 13b);
Einformen einander zugeordneter Paare erster Vorsprünge (15) und dazu korrespondierender erster Ausnehmungen (16) an Begrenzungsflächen (14) der Trennstelle in den Seitenringen (11) des ersten und des zweiten Lagerkäfigabschnitts (13a; 13b), um die Begrenzungsflächen (14) zueinander in wenigstens zwei Richtungen zu fixieren; und
Einformen eines Paars aus einem zweiten Vorsprung (17) und einer dazu korrespondierenden zweiten Ausnehmung (18) zwischen den in den Umfangsstegen (11) eingeformten Paaren erster einander zugeordneter Vorsprünge (15) und Ausnehmungen (16), welches ausgebildet ist, um die Begrenzungsflächen (14) zusätzlich in einer dritten Richtung zu fixieren.
